(19) Europäisches Patentamt
European Patent Office
Office européen des brevets

(11) **EP 1 849 516 A1**

(12) **EUROPEAN PATENT APPLICATION**
published in accordance with Art. 158(3) EPC

(43) Date of publication:
**31.10.2007 Bulletin 2007/44**

(51) Int Cl.:
**B01D 67/00** (2006.01)　　　**B01D 69/06** (2006.01)
**G01N 7/10** (2006.01)

(21) Application number: **04821650.1**

(22) Date of filing: **22.12.2004**

(86) International application number:
**PCT/RU2004/000515**

(87) International publication number:
**WO 2006/075926 (20.07.2006 Gazette 2006/29)**

(84) Designated Contracting States:
**AT BE BG CH CY CZ DE DK EE ES FI FR GB GR HU IE IS IT LI LT LU MC NL PL PT RO SE SI SK TR**

(71) Applicant: **Dressel Pte. Ltd. Company Singapore 068894 (SG)**

(72) Inventors:
• **DESYATOV, Andrey Viktorovich Moscow, 125008 (RU)**

• **IZVOLSKY, Igor Mikhailovich Moscow, 125008 (RU)**
• **EGOROV, Alexei Valerievich Voskresensk, 140200 (RU)**

(74) Representative: **Merrifield, Sarah Elizabeth Boult Wade Tennant Verulam Gardens 70 Gray's Inn Road London WC1X 8BT (GB)**

(54) **MEMBRANE CARD AND METHOD FOR THE PRODUCTION AND USE THEREOF**

(57) Processes are provided for producing porous track membranes, membrane cards, membrane packages, separation elements, separation units and separation systems, for using the same for the separation of materials from fluids, and for determining the maximum pore diameter of membranes. Porous track membranes are produced by exposing a polymeric film to a bombardment of heavy ions to provide the film with a track density, etching pores into the resulting tracked film with an etching solution to provide the film with a density of the pores corresponding to the track density and laminating the resulting porous track membrane to a porous backing by means of an adhesive to produce membrane cards. Membrane packages and a turbulizer are spirally wound around a fluid collection tube to form a separation unit. The separation unit is included in a separation system with a processed fluid accumulator, pipes for the source, unprocessed, and processed fluids, a pressure transducers in fluid communication with the pipes for the processed and unprocessed fluids to control the timing of back flushing of the separation system when the membranes reach a high level of retention of materials separated from the source fluid.

Description

Field of the Invention

The present invention relates to the broad field of the separation of materials of various sizes from a fluid. More particularly, it relates to processes for making membranes, membrane packages, and separation elements to separate out such materials from fluids, methods for quality control of such membranes, and more efficient systems for the separation of materials from fluids.

Background of the Invention

The twenty first century may be remembered as a period of uncontrolled climatic change that results in numerous adverse effects on the human population. One of the adverse effects is a number of severe droughts in areas of the world that have not experienced such drought. This is believed to result in huge requirements for additional fresh potable water. Unquestionably, fresh potable water is the most important compound on earth, for without water all life ceases.

There is vast prior art on the separation of unwanted materials from raw, untreated water to produce fresh potable water. Filtration systems are used to remove particles of various sizes from raw water resulting in treated water containing dissolved salts, primarily sodium chloride. Systems are used for the desalination of seawater or demineralization of brackish water. For example, reverse osmosis or hyperfiltration membrane separation systems remove materials such as the dissolved salts in the 1 to 10 Angstrom unit range and include chemical compounds of about 180 to 15,000 molecular weights, nanofiltration systems remove materials in the 10 to 100 Angstrom unit range, ultrafiltration systems remove materials in the 30 to 1100 Angstrom unit range that include macromolecules of molecular weight of 10,000 to 250,0000, and microfiltration systems remove materials in the 500 Angstroms to 20,000 (0.05 to 2 $\mu$m) Angstroms unit range; see, for example, U.S. Patent No. 6,540,915.

These membrane separation systems typically use spiral wound type membrane packages or modules, which result in low pressure loss and can be manufactured at a relatively low cost. In general, the spiral wound type membrane package is formed from spiral wound type separation membranes that include nanofiltration membranes, ultrafiltration membranes or microfiltration membranes; see, for example, U.S. Patent No. 6,565,747.

The specific type of desalination system used depends on the nature and amount of the impurities in the water. For example, impurities in particulate form and in solution may both need to be removed from the water. The object is to purify the water so that it contains sufficiently low amounts of suspended particles, suspended microbes and dissolved salts to meet the quality requirements of water for drinking, production of food and drink, agricultural irrigation and other industrial uses; see, for example, U.S. Patent No. 6,793,824.

Other processes for the purification of water besides reverse osmosis include filtration and distillation. In conventional particle filtration processes, impurities in particulate form greater than about 10 $\mu$m, such as suspended inorganic particles, are removed using porous constructions such as knitted webs, woven or non-woven fabrics. In cases where very small particles must be filtered, polymer membranes are used which are semi-permeable or microporous, that is, the membranes have very small holes etched through the membrane.

In addition to the vast prior art for the desalination of seawater or demineralization of brackish water for coping with water shortage, separation systems are well known for preparing ultrapure water for the electronic industry and the medicinal field, recycling of waste water and separation, purifying and concentrating fluids in the fields of food, medicine and fine chemicals; see U.S. Patent No. 6,565,747.

In general, separation systems are used to separate out unwanted and wanted materials from fluids. Materials to be removed by separation processes include suspended solids, dissolved solids, pollutants, salts, biological material, emulsified oil, and similar materials removed from such fluids as water, blood, oil, and the like.

Thin film perfluoroacyl-modified cellulose acetate membranes laminated on a porous support can be used in sea water desalination, ultrafiltration, microfiltration, and kidney dialysis, but preferably are used in gas separation; see U.S. Patent No. 4,549,012.

One prior art process for making membranes used for ultrafiltration and microfiltration includes the steps of extrusion, controlled thermostretching and cooling. Examples of materials used in such membranes include microporous polytetrafluoroethylene, polypropylene and polyethylene; see U.S. Patent No. 6,540,915.

Various separation membranes are installed in ultrafiltration and microfiltration units, which are, in turn, placed in systems that are used to selectively filter out materials including chemical compounds of various sizes and molecular weights. This is done by manipulating the pore sizes of these membranes to the desire size range depending on the type of separation desired.

Ultrafiltration systems are known where increased filtration efficiency is achieved due to back-flushing of membranes with the aid of hydraulic accumulators using vibrating interrupters; see USSR Certificate of Invention No. 1667912 of 7 August 1991, Bulletin No. 29, protected by copyright. However, such systems have the disadvantage of being complicated in design and resulting in high filtering costs.

Other prior art fluid filtration systems are disclosed and claimed in Russian Federation Patent No. 2144422 of 20 January 2000, Bulletin No. 2. These fluid filtration systems includes filters, hydraulic accumulators for back-flushing of the filters, pipes for the source, processed and unprocessed fluids with regulating valves, source water pumps, electric valves of back-flushing and timers. These systems reportedly have the advantage of extended filter life due to reverse-flow flushing of the processed water, the flushing proceeds without turning-off the system; the flushing step is implemented by the equipment that is reported to be simple in manufacture and operation. However, the disadvantages of these filtration systems are that the operating pumps produce extra pressure in the filters during the flushing step that reduces the differential pressure across each of the systems resulting in a decrease in the system's efficiency. Flushing is realized according to a previously specified timing diagram that neither takes into account the composition of the source water, i.e., the concentration of suspended particles, the kind of contaminants and the like, nor the possible variations that occur during the filtration process. These disadvantages may result either in excessive consumption of processed fluid for back flushings, or a rapid lowering of filter permeability because of too much time between flushings.

In the near future, predictions indicate there will be a critical need for water purification and separation systems of increased efficiency. There is also a need for systems for the separation of a wide variety of materials from fluids other than water and for processes for producing improved porous membranes, membrane packages, and separation elements for such separation systems.

## Brief Description of the Drawings

Further features and advantages will become apparent from the following and more particular description of various embodiments of the invention, as illustrated in the accompanying drawings in which:

FIG. 1 is a simplified block flow diagram of one embodiment of the process of the present invention for producing a separation element useful in a separation unit;
FIG. 2A is a left perspective view of a typical cassette used for the etching step of cut strips of polymeric film of the process shown in FIG. 1;
FIG. 2B is a side cross-sectional view of the internals of the cassette shown in FIG. 2A;
FIG. 3 is a simplified block flow diagram of another embodiment of the process of the present invention for the manufacture of a membrane element useful in a separation unit;
FIG. 4 is a left perspective view of a typical spiral wound separation element;
FIG. 5A is a left perspective view of a collection tube of the separation elements shown in FIGS. 4 and 6D;
FIG. 5B is a left perspective view of a membrane card that includes the porous track membrane laminated to a porous backing of the separation element shown in FIG. 6D;

FIG. 5C is a left perspective view of a drain of the separation elements shown in FIGS. 4 and 6D; and
FIG. 5D is a left perspective view of a turbulizer of the separation elements shown in FIGS. 4 and 6D.
FIG. 6A is a left perspective view after the first step of one embodiment of the process of the present invention for producing a separation element in which four membrane cards are installed on a collection tube of the type shown in FIG. 5A;
FIG. 6B is a left perspective view after the second step of said embodiment of the process of the present invention for producing a separation element in which four sheets of a drain are joined between each of the membrane cards to form four tongue-shaped membrane packages;
FIG. 6C is a left perspective view after the third step of said embodiment of the process of the present invention for producing a separation element in which four sheets of a turbulizer are joined between each of the tongue-shaped membrane packages;
FIG. 6D is a left perspective view of the final separation element produced in accordance with one embodiment of the present invention;
FIG. 7 is a schematic representation of a preferred embodiment of testing equipment for determining the maximum pore sizes of porous track membranes in accordance with another embodiment of the present invention;
FIG. 8 is a process flow diagram of a preferred embodiment of the separation system of still another embodiment of the present invention; and
FIG. 9 is a typical separation system containing a separation element of one embodiment of the present invention.

## Detailed Description of Various Embodiments of the Present Invention

The following definitions are used herein:

A "fluid" is a gas or liquid that can range from air, water, blood, hydrocarbons, and other fluids that in their unprocessed state contain materials that are separated by the processes and systems that include those of the present invention.
A "collection tube" is a perforated tube used to collect processed fluids.
A "membrane card" is either a porous membrane or a porous track membrane laminated to a porous backing using an adhesive which membrane as laminated has the parameters specified.
A "membrane package" is a combination of two projections of two different membrane cards with one or more sheets of a drain interspersed between each of the porous backing surfaces of the projections.
A "porous membrane" is a thin pliable sheet or layer of a polymeric material containing pores to separate or filter out materials from fluids.

A "porous track membrane" is a tracked film chemically etched to produce pores of a specified diameter along the tracks.

A "separation system" is a combination of at least one separation unit, pumps, valves, pipes or lines, and other equipment for the separation of materials from fluids.

A "separation unit" is a unit in which one or more separation elements are operably installed to carry out the separation or filtration of a material from a fluid.

A "separation element" is one or more membrane packages attached to a fluid collection tube with one or more turbulizers placed between each of the membrane packages.

A "tracked film" is a polymeric film exposed to a bombardment of heavy ions to produce tracks serving as etching sites to produce pores.

A "material" is anything that has a finite size ranging from about 0.01 to about 1.5 $\mu$m that can be separated from a fluid using a porous membrane having an appropriate pore diameter ranging from about 0.01 to about 1.5 $\mu$m.

## 1. A Process For Producing a Membrane Card and a Separation Element Useful In the Separation of Materials From a Fluid

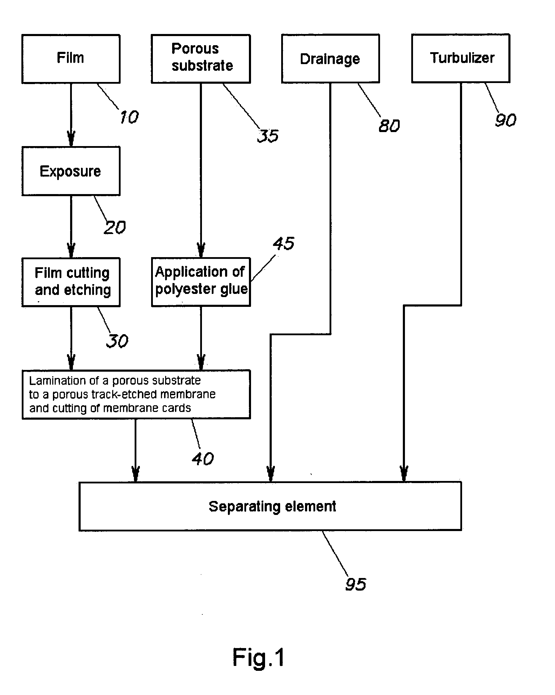

FIG. 1 shows a block diagram showing one embodiment of the process of the present invention in which a backed or supported porous track membrane, i.e., a membrane card, is produced and combined with a turbulizer to form a separation element useful in the separation or filtration of materials from a fluid.

Block 10 represents the step of acquiring a polymeric film usually acquired in continuous rolls of varying widths, typically about 600 millimeters (mm) in width, and thicknesses, typically about 10 $\mu$m. One embodiment of the present invention is not limited to a specific type of polymeric film so long as the film is capable of being rendered porous. Typical examples of polymeric materials that have been found to be etched to a desired porosity include polyamides, fluoropolymers, polystyrene, polyacrylonitrile, cellulose acetate, polysulfone, and polyolefins, such as polypropylene, polyethylene, and copolymers thereof.

In a preferred embodiment of the present invention, the polymeric film is a fluoropolymeric film, and still more preferably a polyvinylidenefluoride (PVDF) film. While polyvinylidene fluoride (PVDF) film is preferred, other fluoropolymer films can be used including, but not limited to those of polychlorotrifluoroethylene (PCTFE), copolymer of chlorotrifluoroethylene with ethylene (ECTFE), polytetrafluoroethylene (PTFE), copolymers of tetrafluoroethylene and perfluoroalkoxyethylene (PFA), copolymers of tetrafluoroethylene and hexafluoropropylene (FEP), terpolymers of tetrafluoroethylene and hexafluoropropylene and perfluoroalkoxyethylene (EPE), copolymers of tetrafluoroethylene with ethylene (ETFE), polyvinyl fluoride (PVF), and any combinations of the these fluoropolymeric resins.

Block 20 represents the exposing step in which the polymeric film is bombarded by heavy ions to provide a film with a predetermined track density. Track density is the number of tracks per unit of area on the surface of the polymeric film as left by heavy ions, i.e., high-energy charged particles, traveling on a path of trajectory from a cyclotron or other particle accelerator. Each of the tracks left by these charged particles is capable of being acted upon by a suitable etchant.

Typical examples of suitable heavy ions for this purpose include but are not limited to the following: argon, krypton, xenon, bismuth and a combination of these heavy ions. Preferably, the track density is in a range of about $10^7$ cm$^{-2}$ to about $10^9$ cm$^{-2}$. See U. S. Patent No. 5,449,917 and Russian Federation Patent No. 2233196 published on July 27, 2004, the relevant discussion of the exposing step is incorporated herein by reference. In addition see E. U. Apel, "Measurements of the Diameter of Selectively Etchable Tracks Produced in Polymer by Heavy Ions." The later is an article that appeared in Nuclear Tracks, Vol. 6, Nos. 2-3, pages 115-118, 1982.

The etching step of block 30 is the next major step in one embodiment of the present invention. In this step, the tracked film is placed in or passed through an etching solution to etch the film with pores that correspond to the track density. The etching step results in a polymeric film having a pore for substantially every track left by a charged particle on the surface of the film. In the resulting porous membrane there is a substantially one to one correspondence between the pore density of pores through the membrane and the track density of high energy particle tracks. A film having a width of about 600 mm, thickness of about 10 $\mu$m, and a length of about 1 to about 20 m with a track density of about $10^7$ tracks per cm$^2$, e.g., $10^7$ cm$^{-2}$, results in a pore density of $10^7$ cm$^{-2}$ with pores having a size of about 1 $\mu$m. Similarly, the same size of film with a track density of about $10^9$ cm$^{-2}$ results in a pore density of $10^9$ cm$^{-2}$ with pores having a size of about 0.01 $\mu$m. By varying the track density between these lower and upper ranges, the pore density can be controlled. By varying the etching time, the pore size can be controlled within a range of about 0.01 and about 1.5 $\mu$m. Preferably, an alkaline solution is used for etching if the polymeric film is made from a fluoropolymeric resin.

It has been demonstrated by experimentation that the preferred alkaline solution is an alkaline solution of potassium permanganate for etching PVDF films. The etching of PVDF film is preferably carried out at temperatures in a range of about 100 to about 150° C. One method for maintaining the alkaline solution greater than about 100° C, is to add salts of an alkali metal, preferably sodium chloride, in sufficient concentrations to achieve the desired rise in etching temperature.

Another variable in the preferred etching process is to pass the alkaline solution in contact with the PVDF under conditions to maintain turbulent flow. This accomplished by circulating the etching solution over the PVDF film at a Reynolds Number from about 100 to about 500. At such flow rates, the temperature gradient of the solution in contact with the film is substantially reduced to zero and the rate of etching is substantially the same on all tracks of film surface. Accordingly, these flow rates result in a narrowing of the range of pore size distribution on the finished porous track membrane.

While the etching step is carried out for a period in a range of about 1 to about 24 hours and a shorter period of about 3 to 9 hours is recommended for an alkaline solution of potassium permanganate. The exact etching time depends on the required diameter of pores and the thickness of the film.

It has been found with longer etching periods that manganese dioxide is formed as a result of the etching reaction and is deposited on the film surface. The manganese dioxide deposition hinders the access of the etching solution to the reaction zone and results in reduced reaction velocity. By circulating the etching solution in the etching bath under turbulent conditions as indicated above, the settling manganese dioxide reaction products are at least partially washed off the film surface and the reaction velocity remains approximately constant during the entire etching step.

By controlling the process conditions of temperature, flow rate and time as described above, it has been found that the etching step takes place without any substantial overheating. Etching without substantial overheating is defined as no overheating or if overheating of the etching solution does occur it is of not more than 1° C. These conditions can be expressed in the following equation:

$$N \leq Q \cdot C_s \cdot \Delta T$$

Where:

N     is power of the preheater, W;
Q     is flow rate of the pickling solution, $m^3/s$;
$C_s$     is specific heat of the solution, $J/(m^3 \cdot K)$;
$\Delta T$     is overheating of the solution, K.

If $\Delta T$ is maintained at no higher than 1° C or° K, $N \leq Q \cdot C_s$.

The intervals of time and temperature are determined by the following factors. Preferably the etching is not carried out at a temperature below 100° C because the etching time increases considerably and results in low process efficiency. On the other hand, it is difficult to provide a temperature above 120° C using the proposed method of addition an alkali salt. If the etching time is not more than about 1 hour, no pores are formed on the membrane. If the etching time is longer than the specified range of 24 hours, there is no further increase of any favorable effect. In addition, high porosity membranes will lose their mechanical properties upon being subjected to etching times outside the desired range.

The result of maintaining these optimum process conditions is a high quality of semi-permeable membranes, i.e. porous membranes. One of the characteristics of the porous membranes produced by the process of this embodiment of the present invention is that the resulting porous membranes maintain the same maximum pore size throughout their useful life in a separation system, i.e., usually an average of about 6 months before the membranes must be replaced.

Block 35 represents the step of acquiring the porous backing that protects the porous track membrane from breaking throughout the useful life of the membrane in a separation system. Preferably the porous backing is impregnated with an epoxy adhesive so that it has the desired strength to withstand the rigorous forces on the resulting membrane card during its use in a separation system.

The lamination step of block 40 or the last major step required in the production of a membrane card suitable for being formed into a separation element for use in a separation system. It has been found that a porous track membrane produced in accordance with the above process conditions of the present invention can be laminated to a porous backing even though fluoropolymeric films in the absence of such conditions are known to have poor adhesion. It has also been found that it is critical to apply a suitable adhesive under the optimum conditions to obtain good adhesion between the porous backing and the porous track membrane. The type of porous backing is not critical and can include woven, non-woven or bonded papers, fabrics and screens that are permeable to water vapor. Examples of suitable backing material are those constructed from fibers of organic and inorganic polymers stable to moisture such as polyesters, fiberglass, and polyolefins, such as polyethylene and polypropylene, and the like.

One embodiment of the lamination step to achieve optimum adhesion of the backing to the porous track membrane to produce the membrane card is to spray the adhesive onto one surface of the porous backing at a concentration of about 1 to about 30 $gm/m^2$ and then to overlay the porous backing onto the porous track membrane to laminate.

Another embodiment of the lamination step represented by block 45 is to apply the adhesive to one surface of the porous backing at a concentration in a range of about 1 to about 20 drops of adhesive per square inch before overlaying the porous backing onto the porous track membrane and allowing the membrane card to set under a suitable pressure.

The type of adhesion that has been found to be the most effective is to spray one surface of, for example, a polyester porous backing with a polyester adhesive and adhering the porous backing to the PVDF porous track membrane obtained from the above etching step. One suitable polyester adhesive is Super 77 adhesive sold by 3M Corporation. Alternatively, the porous backing is bonded to the PVDF porous track membrane by applying an adhesive transfer tape to one porous backing surface and bonding that surface to the PVDF porous track membrane. A suitable adhesive is #924 Adhesive Transfer Tape also sold by 3M Corporation.

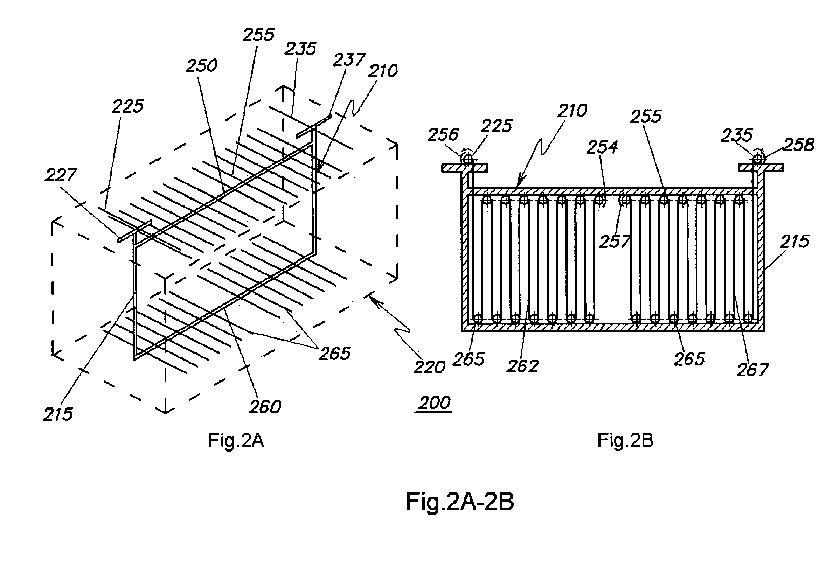

In one embodiment of the present process, the tracked polymeric film is cut into a number of separate sections of a finite length prior to the etching step of block 30. By cutting the tracked film into manageable lengths, the etching step can be carried out in a batch type operation using a cassette 200 shown in FIG. 2A. Lengths of the tracked film that are in the range of about 1 to about 20 m are preferred for cassette 200.

FIGS. 2A and 2B show etching unit 200 including cassette 200 and bath 220 shown in phantom. Cassette 210 includes frame 215, first turning support 225 mounted on first lateral support 227 on frame 215, second turning support 235 mounted on second lateral support 237 on frame 215, and a number of equally spaced fixed upper horizontal supports 255 and lower horizontal supports 265. Frame 215 has upper member 250 upon which upper horizontal supports 255 are mounted and lower member 260 upon which the lower horizontal supports 265 are mounted.

During the film loading step of the etching operation cassette 210 is removed from bath 220. A right end of a first length 262 of a polymeric tracked film is fixed on a fixed upper horizontal support 255 by a first clip 254. The free left end of first length 262 is fed under a lower horizontal support 265 and then over an upper horizontal support 255 until the free left end is at turning support 225. The left end is then attached to turning support 225 by a second clip 256 to fix first section 262 of the film firmly in place on the supports. Similarly, a left end of a second length 267 of the film is fixed on a fixed upper horizontal support 255 by a third clip 257. The free right end of second length 267 is fed under a lower horizontal support 265 and then over an upper horizontal support 255 until the free end is at turning support 235. The right end is then attached to turning support 235 by a fourth clip 258 to fix second section 267 of the film firmly in place. Preferably all of the clips are made from titanium.

At this point in the etching process, turning supports 225 and 235 are rotated counterclockwise and clockwise, respectively to place first and second lengths 262 and 267 under a sufficient degree of preliminary or controlled stretching. The stretching compensates for the tendency for the film lengths to expand when they are placed in the etching bath at etching solution temperatures of not less than 100° C. Although only two lengths of film are shown fixed into position on the supports, up to four lengths can easily be accommodated by one cassette.

During the etching operation, etching solution is poured into bath 220 and cassette 210 is lowered into bath 220. Cassette 210 is raised and lowered to increase the etching reaction.

The following examples demonstrate the method of using etching unit 200. In each of the examples below, a solution, containing 20 mass % of KMnO4, 13 mass % of NaOH, and a salt of an alkali metal in the concentration from 200 g/l to achieve a concentration of complete saturation at the boiling temperature, was poured into etching bath 220. A pump and an electric heater were switched on and the etching solution was circulated as it was brought to the working temperature. When the solution reached the necessary temperature, cassette 210 containing the fluoropolymeric film that had been exposed to a bombardment of heavy charged particles, was immersed into bath 220 and was subjected to chemical etching for a period in the range of 3 to 9 hours. The heating of all surfaces of the tracked film was uniform as a result of the continuous circulation of the etching solution within the etching bath. As indicated above, the exact temperature and the time of etching varies for different types of film.

Example 1

A polyvinylidene fluoride film having a thickness of 13 $\mu$m thick and first exposed to a bombardment of accelerated Kr ions to have a track density of $1 \cdot 10^8$ cm$^{-2}$ was etched in an etching solution containing 20 mass % of KMnO$_4$, 13 mass % of NaOH and 20 mass % of NaCl at 110° C for 5 hours. The etching solution circulated inside the etching bath at a flow rate of 1 m$^3$/h to provide $N_{Re}$ = 200 for this example. The porous track membrane that was produced in this example had an effective pore diameter of 0.3 $\mu$m.

Example 2

For comparison, a similar example was performed in which the same tracked PVDF film was etched in a bath containing 20 mass % of KMnO4 and 13 mass % of NaOH at 100° C for 6 hours to produce a porous track membrane with an effective pore diameter of 0.17$\mu$m. This diameter was smaller by a factor of 1.8 as compared to the porous track membrane produced at temperatures above 100°C.

Example 3

Another PVDF film having a thickness of 25 $\mu$m thick and first exposed to a bombardment of accelerated Kr ions to have a track density of $5 \cdot 10^7$ cm$^{-2}$ was etched in an etching solution containing 20 mass % of KMnO$_4$, 13 mass % of NaOH and 20 mass % of NaCl at 105° C for 8 hours. The etching solution circulated inside the etching bath at the same flow rate to provide the same $N_{Re}$ as Example 1. The porous track membrane that was produced in this example had an effective pore diameter of 0.4 $\mu$m.

Example 4

For comparison, a similar example was performed in which the same tracked PVDF film was etched in a bath containing 20 mass % of KMnO4 and 13 mass % of NaOH at 100° C for 8 hours to produce a porous track membrane with an effective pore diameter of 0.1 $\mu$m. This diameter was smaller by a factor of 4 as compared to the porous track membrane produced at temperatures above 100°C.

Therefore, it has been found that by strictly controlling the temperature of the process above 100° C, the time to produce a given maximum pore size is one fourth that required when the temperature is maintained at 100° C.

The backed porous track membrane is cut into membrane cards of the desired size in block 40 for combining with the drain represented by block 80 and the turbulizer represented by block 90 to form the separation element represented by block 95 for use in a separation system of the type described below.

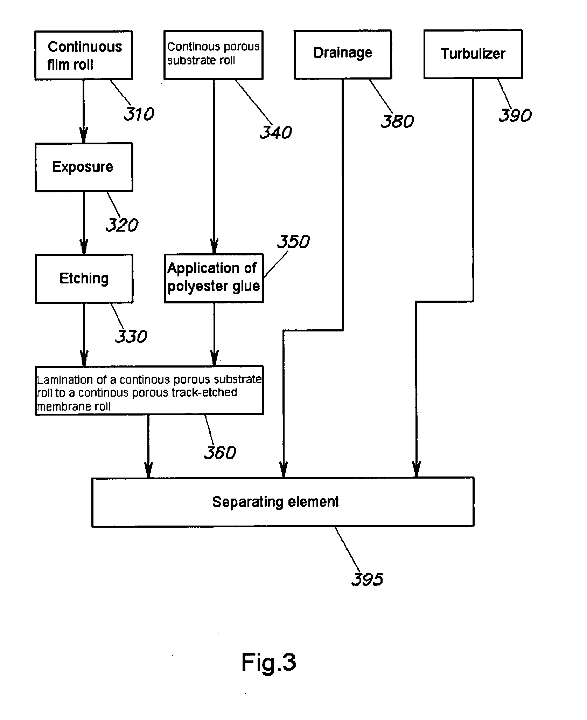

FIG. 3 shows another embodiment of producing a membrane card in which a continuous roll of tracked polymeric film represented by block 310 is passed to block 320 for exposure to a bombardment of to heavy ions as described above. From block 320, the continuous roll of tracked film is passed to block 330 to be subjected to a suitable etching solution as described above. However, in the case of a continuous roll, a continuous etching unit (not shown) is contemplated that includes introducing a fresh etching solution at the tracked film inlet end of the etching unit and removing a spent etching solution at the tracked film outlet end.

A continuous roll of porous backing from block 340 is sprayed with a layer of adhesive on the upper surface of the porous backing in block 350. The roll of etched tracked film is laminated to the roll of porous backing and is cut into membrane cards of the desired lengths in block 360. The membrane cards are then combined with the drain from block 380 and the turbulizer in block 390 to form the separation membrane element of block 395.

**2. A Process For Producing a Separation Unit Useful In the Separation Of Materials From a Fluid**

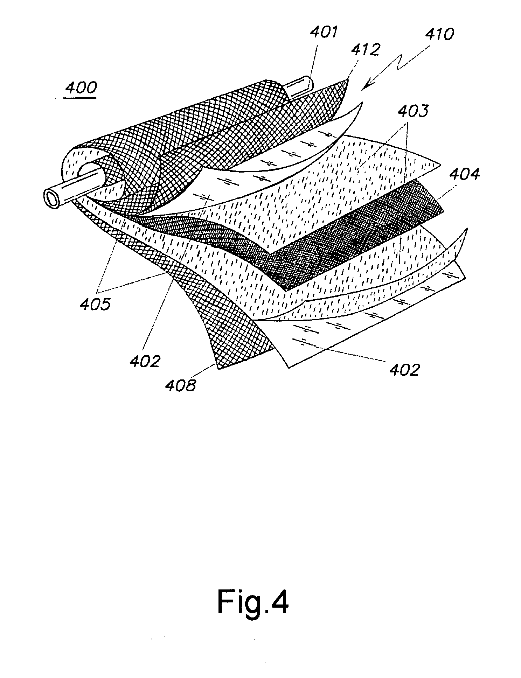

FIG. 4A shows a typical spiral wound separation element 400 suitable for a separation unit. The process for manufacture of membrane package 400 starts with a fluid collection tube 401 upon which are spirally wound two sheets of a porous track membrane 402 or a single sheet of porous track membrane 402 that is folded in half. Porous track membrane 402 is laminated to porous backing 403 in accordance with the process of one embodiment of the present invention described above. Alternatively, two pieces of porous backing 403 formed from a spun-bonded polypropylene fiber or the like are used between the two halves of porous track membrane 402. In this alternative, a sheet of a drain 404 is interspersed between each of the porous backings 403 as shown to assure the draining of the processed fluid to the perforations of the collection tube 401. A first sheet of a turbulizer 405 is then placed as a top or upper surface 408 of the resulting spirally wound element 410. A second sheet of turbulizer 405 is placed as the bottom or lower surface 412 of element 410. The result of this orientation is to have a portion of bottom surface 412 in direct contact with and attached to tube 401 using techniques that are well-known in the art.

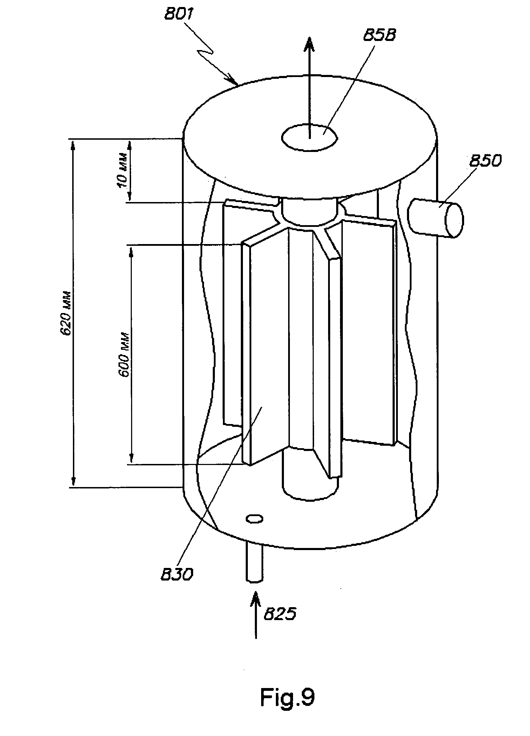

In the last step of the process of this embodiment of the present invention, one or more separation elements 400 are installed in a separation unit of the type shown in FIG. 9. Turbulizer 405 is made from a porous gauze-like material. Drain 404 is also made from a porous gauze-like material. The porous gauze-like material can be gauze made from cotton or from polymer fabric such as a polyester cloth.

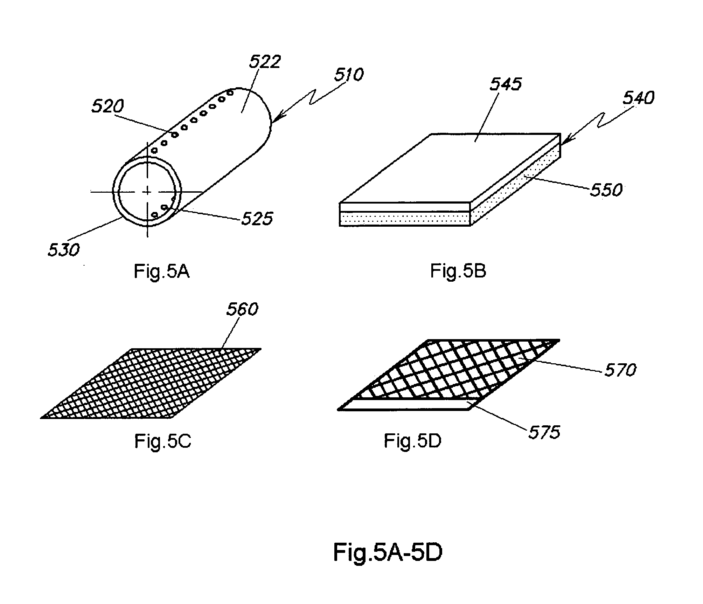

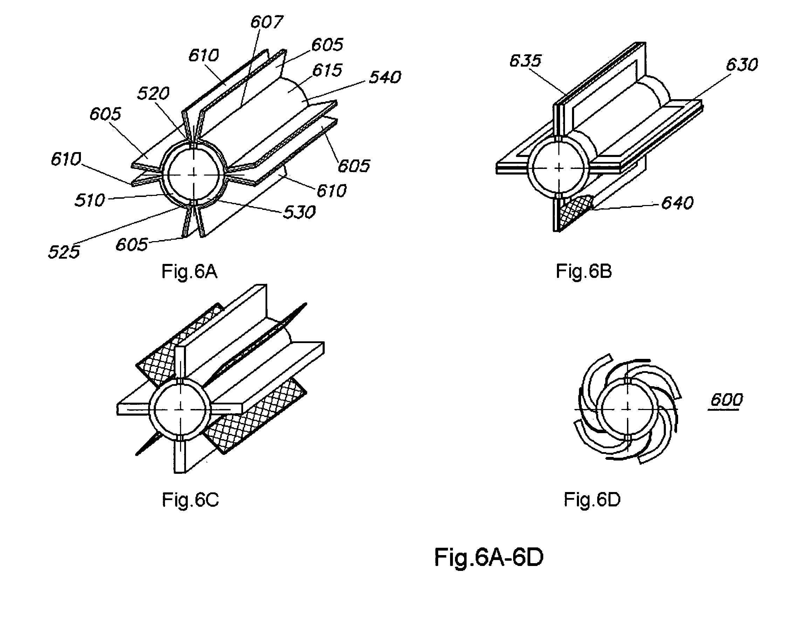

FIGS. 5A-5D show the individual components that are combined to produce the separation element shown in FIG. 6D. FIG. 5A shows collection tube 510 having a series of equally spaced upper perforations 520 along the upper portion 522 of tube 510 and lower perforations 525 along the lower portion 530 of tube 510. FIG. 5B shows membrane card 540 having porous track membrane 545 laminated to porous backing 550, preferably in accordance with the process of one embodiment of the present invention described above. FIG. 5C shows the draining cloth or gauze 560. FIG. 5 D shows turbulizer 570 that is preferably made from a more porous gauze than that used in draining cloth 560. A protector 575 on the lower edge of turbulizer 570 provides a tab for gluing turbulizer 570 to membrane card 540 as described below. Protector 575 prevents the possibility of porous track membrane 545 breaking at contact between porous track membrane 545 and turbulizer 570 during the manufacture of the separation element as well as during the filtering or separation operation itself. The use of protectors for this purpose is known in the art.

FIGS. 6A-6C show the three essential steps in producing the preferred embodiment of separation element 600 shown in FIG. 6D. Separation element 600 is produced by first attaching four membrane cards 540 around the circumference of collection tube 510 as shown in FIG. 6A so that porous backing 550 is toward collection tube 510 and porous track membrane 545 faces outward from collection tube 510. Each membrane card 540 is bent along a bending line 607 so that it has a first projection 605 on one side of membrane card 540 and a second projection 610 on its other side. The central section 615 between the first projection 605 and second projection 610 of membrane card 540 is joined to a portion of collection tube 510 by a suitable adhesive as described in detail below. The first projection 605 of a first membrane card 540 is positioned along upper portion 522 of collection tube 510 so that the bending line 607 is parallel to one side of the row of equally spaced upper perforations 520. The second projection 610 of a second membrane card 540 is positioned along upper portion 522 of tube 510 so that bending line 607 is also parallel to the other side of the row of equally spaced perforations 520. In a similar manner, the first projection 605 of a third membrane card 540 is positioned along lower portion 530 of collection tube 510 adjacent one side of the row of lower perforations 525 and the second projection 610 of the fourth membrane card 540 is positioned along lower portion 530 of collection tube 510 adjacent the other side of lower perforations 525. Four separate sheets of drain 560 are interspersed between the porous backing 550 side of each of first projection 605 and the second projection 610.

Each of the porous backings 550 is pressed around the perimeter to form a glue joint 630 as shown in FIG. 6B. Glue is applied to each of the glue joints 630 and the glue is drifted along glue joint 630 and around the perimeter of the porous backing 550 surface of membrane card 540 that includes the central section 615. Each of first projections 605 and second projections 610 as well as the central section 615 and collection tube 510 are then pressed together. Glue is then applied to protector 575 of each turbulizer 570 and each of the protectors is pressed to central section 615 of membrane card 540. The type of glue used for these operations is preferably not the same as that used to glue porous backing 550 to porous track membrane 545. The resulting separation elements from the steps shown in FIGS. 6A-6C are rolled in the final step by a suitable rolling machine to produce separation units 600 as shown in FIG. 6D.

The preferred length of separation unit 400 and separation unit 600 was established by the formula:

$$L = 3/\sqrt{2} k_2/k_1,$$

where: L is length of the membrane package, meters (m)
$k_1$ is the drain parameter, $m^3/hr \cdot MPa$;
$k_2$ is the membrane card parameter, $m^3/hr \cdot MPa \cdot m^2$.

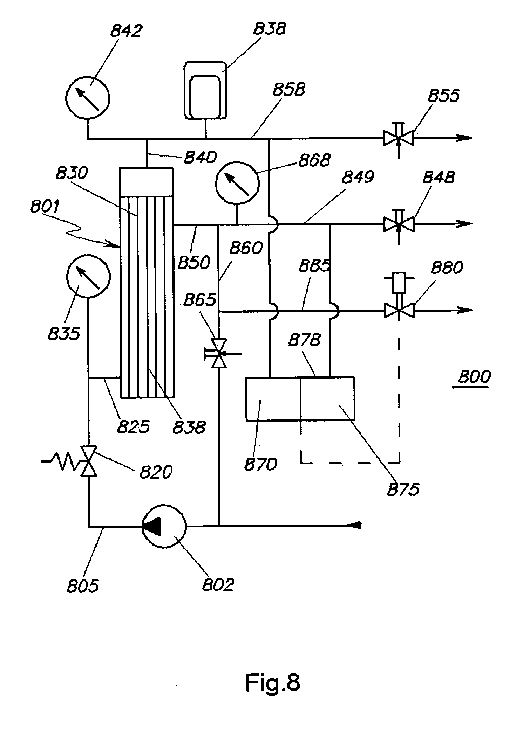

The membrane elements of the present invention are considered operably attached to the collection tube when at least a portion of the drain is in fluid communication with the perforations of collection tube 510. In the embodiment shown in FIG. 6D, upper drain 635 and lower drain 640 are centered directly over the row of upper perforations 520 and lower perforations 525 to insure that when the separation element is installed in a separation system, the processed fluid passes through membrane card 540 and drain 635 to the interior of collection tube 510 and leaves through the processed fluid outlet as described below in connection with FIG. 8.

### 3. A Method for the Determination of the Maximum Size of the Pores a Porous Membrane

One embodiment of the present invention is to control of the structural properties of porous membranes of the type that are recovered by the processes described above. Such membranes have widespread uses in the chemical, medical, electronic and other industries where it is critical all the membranes have a given maximum pore size that has been accurately determined.

Prior art methods of studying porous materials are based on a comparison of the maximum flow rate during the evaporation of liquid from the surface of the porous membrane with the flow rate at the available hydrostatic pressure differences. These prior art methods allow one to calculate an average radius of capillaries. The measurements obtained using these methods are indirect. Measurement error depends upon the state of a porous body. When large pores are present in the porous membranes, the error will be too high. Such methods do not allow one to determine the exact size of the maximum pore diameters; see Certificate of authorship of USSR № 524110, MPK: G01N11/00 published on 05.08.76, bull. No. 29.

A method of determining the maximum size of a pore using a bubble method is taught in GOST R 50516-93; "Polymer Membranes. A Method Of Determination Of The Point Of A Bubble For Plane Membranes." In the bubble method, a thin porous membrane is steeped in liquid until it is saturated and then is clamped in a cell. The cell is filled with liquid so as the surface of liquid fully covers the surface of the porous membrane. Gas is fed into the cell under the membrane while continuously measuring the gas pressure. The maximum pore size is calculated at the pressure at which the first bubble of gas passes through the membrane. The method is simple and effective, but its practical usage is restricted by the strength of membranes. Specifically, in determining the maximum pore size of membranes having pore sizes of an order 0.05 to 0.5 $\mu$m, the pressure difference on the membrane leads to stresses that destroy the membrane. The use of a backing distorts the measurement results. This method is not practically as a method for determining the maximum pore size of the track membranes of the present invention as it leads to their destruction during the test.

The object of this embodiment of the present invention is to increase the efficiency of the maximum pore size measurements without causing the destruction of the membranes. Another object of this embodiment is to increase the range of membrane thickness on which it is possible to make these measurements.

These objectives are obtained by installing a preliminarily liquid-impregnated porous track membrane into a cell, filling the cell with a liquid, supplying a gas to the cell and measuring its pressure. The cell with the membrane is placed into a vessel. The cell and vessel are hydraulically connected with each other. A non-destructive pressure difference is applied to the membrane as the liquid is pump off from the vessel. Gas in the form of a vapor having the same composition as the liquid in the cell is fed to the vessel. The vapor pressure in the vessel is constantly measured. The pressure at which the pressure difference disappears over the membrane is recorded. Once this pressure is recorded, a determination is made of the value of the liquid surface tension force. Using this data, the value of maximum membrane pore size is calculated using Laplace's formula. Because the pressure difference on the membrane is minimized by pumping liquid off the membrane as the pressure difference is applied, the integrity of the method is realized and any losses of the membranes as a result of breakages during the test are minimized.

Specifically, the calculations for determining the maximum pore diameter of the membranes are as follows: Pressurization of the vessel with cell by the same liquid vapor leads to vapor condensation on the membrane surface. In so doing, the temperature increases. The heat supplied from the vapor to the liquid-impregnated membrane surface occurs by condensation. The heat discharged from the membrane to the liquid occurs by heat conductivity. The boundary conditions are determined by the following equation:

$$\text{Criterion Bi} = a \cdot d/l$$

Where: Bi = criterion of boundary similarity (criterion Bio);
a = coefficient of convective heat transfer;
l = coefficient of heat conductivity; and
d = typical size (diameter of the cell).

As Bi tends to infinity (practically at Bi>100), the membrane surface temperature will be equal to the vapor temperature over the membrane; see "Theoretical Foundations Of Heat Engineering-Heat-Technical Experiment," a reference book under the editorship of V.A. Grogoriev and V.M. Zorin, Book 2, Moscow, "Energoatomizdat" Publishing House, 1988, pp.197-198). Criterion Bi equals 1000 for a cell of diameter 50 mm using liquid Freon 12. The temperature of the liquid-impregnated membrane surface can be determined with the vapor pressure over the membrane. The surface tension value reduces as a result of liquid heating because the vapor breakthrough occurs under the membrane. Therefore, the pressure difference on the membrane disappears.

The method excludes a visual examination of the membrane thereby increasing the accuracy in determination of the maximum pore size of the membrane by this bubble test method. This method can be used to determine the maximum pore diameter of a membrane without destroying the membrane during the pore diameter determination.

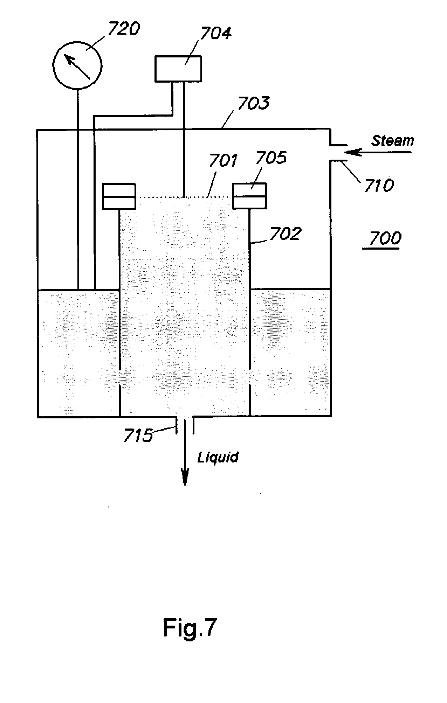

FIG. 7 shows the preferred testing equipment 700 for determining the maximum pore sizes of porous membranes in accordance with this embodiment of the present invention. Porous membrane 701 is first impregnated with a liquid, mounted in a suitable holder 705 and placed into the cell 702. Cell 702 containing porous membrane 701 is installed into sealed vessel 703. The lower part of cell 702 has the holes hydraulically connecting the cavity under porous membrane 701 with vessel 703. Vessel 703 is filled with liquid up to the level fully covering cell 702. Liquid is then gradually pumped from vessel 703 through outlet 715. In so doing, impregnated porous membrane 701 retains liquid at the expense of the action of the capillary forces. Consequently, a difference appears between the levels of liquid in cell 702 and vessel 703, which is recorded by differential pressure transducer 704. The pumping of the liquid stops upon reaching the assigned pressure difference on porous membrane 701. Vapor of the same liquid is fed into vessel 703 via inlet 710 under porous membrane 701 at some excess pressure. The vapor pressure that is increasing is continuously measured in vessel 703 using pressure gauge 720. A thin layer of liquid appears on the surface of porous membrane 701. The temperature of this layer increases as the pressure in vessel 703 increases. Since convective heat transfer to the surface of porous membrane 701 by condensation greatly exceeds the heat discharge from porous membrane 701 to the liquid, the surface temperature of porous membrane 701 assumes a value equal to the ambient vapor temperature and can be determined as a pressure in vessel 703 by the equation of the condition of saturated vapor. As the temperature of porous membrane 701 increases, the surface tension of the impregnating liquid in porous membrane 701 decreases. At some time, the pressure difference on porous membrane 701 exceeds the capillary holding capacity of porous membrane 701. At this point, vapor breaks through the porous membrane 701 and the pressure difference on porous membrane 701 disappears. The pressure in vessel 703 at which the pressure on porous membrane 701 disappears is recorded. On reaching that pressure, the value of the liquid surface tension coefficient is determined based on the saturated vapor curve and the value of maximum pore size is calculated using Laplace's formula.

The example below was carried out to demonstrate the foregoing testing method.

Example 5

The maximum pore size of a fluoropolymeric membrane 601 was measured using Freon 12 as the working fluid. A pressure differential of 7.5 kPa was maintained on porous membrane 601 at an initial pressure in the vessel 703 of 5.4 bar. The pressure difference disappeared at a Freon pressure increase up to 7.52 bar in vessel 603. The value of surface tension coefficient equaled $7.5 \cdot 10^{-3}$ N/m based on this pressure. The maximum size of pores diameter was calculated to be d = 1.0 $\mu$m using Laplace's formula:

$$d = \frac{4\sigma}{P}$$

Where: d = pore diameter, m;
σ = surface tension force of the liquid, N/m;
P = pressure, Pa
It is understood in this calculation that cosine of the contact angle on the membrane was equal to 1.

### 4. A Separation System For The Separation Of Materials From A Fluid

FIG. 8 shows a separation system 800 that represents another embodiment of the present invention in which materials are more efficiently separated from a source fluid. In separation system 800, these materials are deposited on separation elements installed in the separation unit 801 of the type shown in FIG. 9, and the deposited materials are periodically backwashed into the processed fluid for disposal.

System 800 includes a pump 802 for feeding a source fluid through feed line 805, first valve 820, preferably a trigger valve, and inlet 825 to a separation unit 801 containing filter elements or membrane element 830. A first pressure gauge 835 is operably connected to inlet 825 for measuring the pressure of the source fluid passing through first valve 820. A hydraulic accumulator 838 is in fluid communication with at least one processed fluid outlet 840. The processed fluid is the fluid that has passed through separation element 830 such as but not limited to the separation element produced in according with one embodiment of the present invention. A second pressure gauge 842 is operably connected to a processed fluid outlet 840 for measuring the pressure of the processed fluid passing to hydraulic accumulator 838. A second valve 848 is placed in the unprocessed fluid line 849 connected to the at least one unprocessed fluid outlet 850. A third valve 855 is placed in the processed fluid line 858 that is connected to processed fluid outlet 840. A by-pass line 860 runs between the source fluid feed line 805 and the unprocessed fluid line 849. A fourth valve 865 is placed on by-pass line 860 to regulate the amount of recycle of the unprocessed fluid to the source fluid in feed line 805.

In separation system 800, source fluid in feed line 805 is supplied via pump 802 through the trigger valve 820 to the source fluid inlet 825. One part of the source fluid that that is fed into separation unit 801 containing separation element 830 is removed as processed fluid through processed fluid outlet 840. One portion of the processed fluid begins filling hydraulic accumulator 838 and the other portion of processed fluid is directed through processed fluid line 858 and valve 855 to a storage vessel (not shown) for the end user. The other part of the source fluid that is fed into separation unit 801 is removed as unprocessed fluid through unprocessed fluid outlet 850, line 849 and valve 848 for discharge. Alternatively under certain conditions, the unprocessed fluid is recycled through by-pass line 860 and valve 865 to feed line 805 for a second pass through separation unit 801. Flow rates and pressures of the processed and unprocessed fluids are controlled by valves 855 and 848, and pressure gauges 842 and 868, respectively. By-pass regulating valve 865 is set to have pump 802 running within its set parameters.

As hydraulic accumulator 838 gradually fills up, the pressure of the processed fluid increases as indicated by pressure regulator 842. On reaching the specified pressure that indicates hydraulic accumulator 838 has been filled, a processed fluid section 870 of a pressure transducer 875 signals separation system 800 to carry out back flushing of separation unit 801. The value of the specified pressure depends on the design of separation unit 801.

The reason for an increase in pressure is apparent to those skilled in the art because during the operation of separation unit 801 to remove suspended materials contained in the source fluid, these materials are retained by the separation elements 830 within separation unit 801. Pressure is sensed on an unprocessed fluid section 878 of transducer 875. On reaching the specified pressure, defined by the system design and filtration regime, the unprocessed fluid section 878 of transducer 875 sends a signal to open a fifth valve 880 that is an electric valve operably connected to transducer 875. This is the signal sent by pressure transducer 875 that transfers separation system 800 from the operating to the flushing mode.

In the flushing mode, pressure in unprocessed fluid pipe 849 becomes less than that in processed fluid pipe 858, the flow of source fluid through the source fluid inlet 825 is terminated. The processed fluid in accumulator 838 flows through processed fluid outlet 840 back through the filter elements 830 in system 801 to flush out the retained material. At the expense of a pressure differential, the processed fluid from hydraulic accumulator 838 containing the removed material is rejected from the system through unprocessed fluid pipe 805, by-pass line 860, valve 865, line 885 and a fifth valve 880, an electric valve operably connected to transducer 875.

During the flushing operation of separation system 800, the fluid pressure of the processed fluid drops to a prescribed value defined by the design of separation unit 801. This pressure drop is measured by pressure regulator 842 and registered by the processed fluid section 870 of transducer 875. At this prescribed value, transducer 875 sends a signal to close electric valve 880 on signal from the processed fluid section 870. When valve 880 is closed, the back flushing operation ceases and the operating mode of separation system 800 is reestablished.

The separation system of the present invention overcomes the disadvantages of prior art systems by having an increased efficiency owing to an increase in the yield of processed fluid upon separation, an increase of life of the system's separation elements because of the increase in the differential pressure during the flushing.

Example 6

The separation system, according to the above description, had an operating unit 801 installed with a separation element 830 and was used to filter a standard aqueous solution having a concentration of suspended matters equal to 10 mg/l. After the filtering operation, the system was subjected to flushing with an increasing pressure differential of up to 0.07 MPa. The time between flushings was, on the average, 7 minutes. The efficiency of the separation system operating at a rate of 500 l/h was such that 10 % of the processed fluid was consumed in the flushing step.

The applications for the membrane cards, membrane packages, separation elements, separation units, and separation systems of the various embodiments of the present invention include: (a) treatment, reclamation, recycling and reuse of industrial in-feed and wastewater; (b) desalination of sea water; (c) liquid separation for a wide variety of liquid industrial chemicals; and (d) membrane-based separation technology for the removal of sulfur and mercaptans from crude oil, natural gas, condensate and refined petroleum products.

Without departing from the spirit and scope of this invention, one of ordinary skill in the art can make various changes and modifications to each of the various embodiments of the present invention to adapt to various other applications. As such, these changes and modifications are properly, equitably, and intended to be, within the full range of equivalents of the following claims.

**Claims**

1. A process for producing a membrane card useful in the separation of materials from a fluid comprising the steps of:

   a) exposing a polymeric film to a bombardment of heavy ions to provide the film with a track density;
   b) etching pores into the resulting tracked film with an etching solution to provide the film with a density of the pores corresponding to the track density;
   c) laminating the resulting porous track membrane to a porous backing by means of an adhesive; and
   d) producing a membrane card with the parameters specified.

2. The process of claim 1, wherein said heavy ions are selected from the group of ions consisting of krypton, argon, xenon, bismuth, and combinations thereof.

3. The process of claim 1, wherein said track density is in a range of about $10^7$ cm$^{-2}$ to about $10^9$ cm$^{-2}$.

4. The process of claim 1, wherein the size of said pores is in a range of about 0.01 to about 1 $\mu$m.

5. The process of claim 1, wherein said etching solution is an alkaline solution.

6. The process of claim 5, wherein said polymeric film is a fluoropolymeric film.

7. The process of claim 6, wherein said fluoropolymeric film is polyvinylidene fluoride.

8. The process of claim 7, wherein said alkaline solution is an alkaline solution of potassium permanganate

9. The process of claim 8, wherein said alkaline solution also contains salts of alkali metals in sufficient concentration to increase the boiling point of the resulting alkali-metal-containing solution to temperatures greater than 100° C.

10. The process of claim 9, wherein said etching is carried out at temperatures in a range of about 100 to about 150° C.

11. The process of claim 10, wherein said etching solution is passed in contact with said tracked film at a flow rate to produce a Reynolds Number from about 100 to about 500.

12. The process of claim 11, wherein said etching is carried out for a period in a range of about 1 to about 24 hours.

13. The process of claim 12, wherein at least the temperature, flow rate and time are controlled so that the etching step takes place with overheating of the etching solution of not more than 1° C.

14. The process of claim 13, wherein said alkali metal salt is sodium chloride.

15. The process of claim 1, wherein said adhesive is sprayed onto one surface of the backing at a concentration of about 1 to about 30 gm/m$^2$ and the porous track membrane is laminated to the porous backing.

16. The process of claim 15, wherein said glue is applied to the surface of the backing at a concentration in a range of about 1 to about 20 drops of adhesive per square inch and the porous track membrane is laminated to the porous backing.

17. The process of claim 1, wherein the membrane card is spirally wound around a fluid collection tube to form a separation unit to install it in a separation system.

**18.** The process of claim 17, wherein a plurality of the membrane cards are formed into a separation element in which (a) each of the membrane cards is folded in half with the porous backing facing outside the fold and having a glue joint around the perimeter of the porous backing, (b) at least two membrane cards are bent along a bending line to expose outward projections on each of the membrane cards which projections are placed so that the bending lines of the membrane cards are adjacent to perforations in the collection tube, (c) a drain is placed between the exposed porous backing of each of the outward projections, and (d) adhesive is deposited along the glue joint and the bending line of each membrane card to join the drain to the membrane card to form a plurality of membrane packages for the separation element.

**19.** The process of claim 17, wherein a plurality of membrane cards are formed into a separation element in which (a) each of the membrane cards is bent to form projections on each of the membrane cards and a central section between each of the projections with the porous backing facing outside the bend and having a glue joint around the perimeter of the porous backing, (b) each of the central sections is pressed onto the fluid collection tube so that each of the projections extend outwardly from the bending line, (c) a drain is interspersed between the porous backing of each of the projections, and (d) adhesive is deposited along the glue joint and the bending line to join the drain to each of the membrane cards to form the membrane packages for the separation element.

**20.** The process of claim 19, wherein a sheet of a turbulizer of a porous gauze-like material is attached to project outwardly from the perforated collection tube.

**21.** The process of claim 19, wherein said porous gauze-like material is the same for use in the drain and the turbulizer.

**22.** The process of claim 19, wherein said porous gauze-like material has different properties for use in the drain and the turbulizer.

**23.** A process for producing a separation system useful in the separation of materials from a fluid comprising the steps of:

a) exposing a fluoropolymeric film to a bombardment of heavy ions to provide the film with a track density;
b) cutting the resulting tracked film into a plurality of separate sections;
c) etching the sections of tracked film with an etching solution to provide the sections of film with a density of pores corresponding to the track density;
d) laminating the resulting sections of the porous track membranes to a porous backing by means of an adhesive;
e) producing a membrane card with the parameters specified;
f) forming a glue joint around of the perimeter of the porous backing of the membrane cards;
g) bending each of the membrane cards along a bending line to be adjacent to another membrane card to form a projection and a central section between each of the projections so that the porous backing faces outward;
h) pressing the central section of each of the membrane cards onto a fluid collection tube so that each of the projections extends outwardly from the collection tube and the bending lines of at least two of the membrane cards pressed onto the collection tube are adjacent to its perforations;
i) interspersing a porous gauze-like drain between the porous backing of each of the outward projections of each of a plurality of membrane cards so that at least one drain is in contact with the perforations in the collection tube;
j) depositing adhesive along the glue joint of each of the membrane cards to join the drain to the membrane card and the membrane packages to the collection tube;
k) attaching at least a sheet of a turbulizer to the central section of each of the membrane cards and between the projections so that the turbulizers of the separation elements project outwardly from the fluid collection tube; and
l) producing a separation system containing a plurality of the resulting membrane packages operably attached to the fluid collection tube.

**24.** The process of claim 23, wherein said heavy ions are selected from the group of ions consisting of krypton, argon, xenon, bismuth, and combinations thereof.

**25.** The process of claim 24, wherein said track density is in a range of about $10^7$ cm$^{-2}$ to about $10^9$ cm$^{-2}$.

**26.** The process of claim 24, wherein the size of said pores is in a range of about 0.01 to about 1 $\mu$m.

**27.** The process of claim 24, wherein said etching solution is in an alkaline solution.

**28.** The process of claim 27, wherein said fluoropolymeric film is polyvinylidene fluoride.

**29.** The process of claim 28, wherein said alkaline solution is an alkaline solution of potassium permanganate

**30.** The process of claim 29, wherein said alkaline solution also contains salts of alkali metals in sufficient concentration to increase the boiling point of the resulting etching solution to temperatures greater than 100° C.

**31.** The process of claim 30, wherein said etching is carried out at temperatures in a range of about 100 to about 150° C.

**32.** The process of claim 31, wherein said etching solution is passed in contact with said tracked film at a flow rate to produce a Reynolds Number from about 100 to about 500.

**33.** The process of claim 32, wherein said etching is carried out for a period in a range of about 1 to about 24 hours.

**34.** The process of claim 33, wherein said conditions of temperature, flow rate and time are controlled so that the etching step takes place with overheating of the etching solution of not more than 1° C.

**35.** The process of claim 34, wherein said alkali metal salt is sodium chloride.

**36.** The process of claim 23, wherein the section of cut tracked film is placed within a cassette to carry out step (c) by fixing one ending of the film on one of a plurality of fixed supports, extending the free end of the film around the remainder of the fixed supports, fixing the free end to a turning support, and turning the turning support to provide a preliminary stretching of the film before etching.

**37.** The process of claim 36, wherein the cassette is placed in the etching solution.

**38.** The process of claim 23, wherein said adhesive is sprayed onto one surface of the backing at a concentration of about 1 to about 30 gm/ m$^2$ and the porous track membrane is laminated to the porous backing.

**39.** The process of claim 23, wherein said adhesive is applied to one surface of the backing at a concentration in a range of about 1 to about 20 drops per square inch and the porous track membrane is laminated to the porous backing.

**40.** A process for producing a separation system useful in the separation of materials from a fluid comprising the steps of:

a) exposing a continuous roll of polymeric film to a bombardment of heavy ions to provide the film with a track density;
b) etching the continuous roll of tracked film as the roll passes through an etching solution to provide the sections of film with a density of pores corresponding to the track density;
c) laminating the resulting roll of porous track membranes to a roll of porous backing by means of an adhesive;
d) cutting the continuous roll of backed porous track membranes into a plurality of membrane cards;
e) forming a glue joint around the perimeter of the porous backing of the membrane cards;
f) bending the adjacent membrane cards along the respective bending lines to form projections and a central section between each of the projections so that porous backing faces outward;
g) pressing the central section of each of the membrane cards onto a fluid collection tube so that each of the projections extends outwardly from the collection tube and the bending lines of at least two of the membrane cards pressed onto the collection tube are adjacent to its perforations;
h) interspersing a porous gauze-like drain between the porous backing of each of the outward projections of each of a plurality of membrane cards so that at least one drain is in contact with the perforations in the collection tube;
i) depositing adhesive along the glue joint of each membrane card to join the drain to the membrane card and the collection tube;
j) attaching at least a sheet of a turbulizer of a porous gauze-like material on the porous membrane surface of each of the central sections and between the projections so that the turbulizers project outwardly from the perforated fluid collection tube; and
k) producing a separation system containing a plurality of membrane cards operably attached to the fluid collection tube.

**41.** A process for producing a membrane card useful in the separation of materials from a fluid comprising the steps of:

a) exposing a fluoropolymeric film to a bombardment of heavy ions to provide the film with a track density;
b) etching pores in the resulting tracked film with an etching solution to provide the film with a density of the pores corresponding to the track density;
c) determining the maximum diameter of the pores of the resulting porous track membrane; and
d) laminating the porous track membrane having the desired maximum pore size to a porous backing by means of an adhesive; and

e) producing a membrane card containing a porous backing and having the parameters specified.

**42.** The process of claim 41, wherein step (c) comprises:

a) installing a liquid-impregnated membrane into a cell;

b) filling the cell with a liquid;

c) feeding a gas into the cell;

d) measuring the differential pressure on the cell;

e) placing the cell within a closed container so that the cell and closed vessel are in fluid communication;

f) applying a non-destructive pressure differential on the membrane while simultaneously pumping liquid from the closed container;

g) feeding a gas having the same composition as the liquid to the resulting cavity in the vessel created by the removal of the liquid from the vessel;

h) continuously measuring the pressure and pressure difference over the surface of the membrane;

i) recording the pressure over the surface of the membrane at which the pressure difference disappears on the membrane;

j) determining the value of the liquid surface tension coefficient at the pressure recorded under step i; and

k) calculating the value of the maximum pore size based on Laplace's formula.

**43.** A method for the determination of the maximum diameter of membrane pores comprising:

a) installing a liquid-impregnated membrane into a cell;

b) filling the cell with a liquid;

c) feeding a gas into the cell;

d) measuring the pressure of the cell;

e) placing the cell within a closed container so that the cell and closed vessel are in fluid communication;

f) applying a non-destructive pressure on the membrane while simultaneously pumping liquid from the closed container;

g) feeding a gas having the same composition as the liquid to the resulting cavity in the vessel created by the removal of the liquid from the vessel;

h) continuously measuring the pressure and pressure difference over the surface of the membrane;

i) recording the pressure over the surface of the membrane at which the pressure difference disappears on the membrane;

j) determining the value of the liquid surface tension coefficient at the pressure recorded under step (g); and

k) calculating the value of the maximum pore diameter based on Laplace's formula.

**44.** A process for the separation of materials from a fluid comprising the steps of:

a) exposing a polymeric film to a bombardment of heavy ions to provide the film with a track density;

b) etching pores into the resulting tracked film with an etching solution to provide the film with a density of the pores corresponding to the track density;

c) laminating the resulting porous track membrane to a porous backing by means of an adhesive;

d) producing a membrane card with the parameters specified; and

e) installing the membrane card in a separation unit.

**45.** The process of claim 44, wherein said separation unit has at least one source fluid inlet, at least one processed and at least one unprocessed fluid outlet.

**46.** The process of claim 45, wherein said separation unit has means for changing the separation unit from a processing mode to a back flushing mode after a predetermined time based on a pressure differential between the pressure in the processed fluid outlet and the unprocessed fluid outlet.

**47.** The process of claim 46, wherein said means is carried out by a transducer.

**48.** The process of claim 47, wherein said transducer has first and second sections, the first section for receiving a signal of the pressure reading of the processed fluid outlet and the second section for receiving a signal of the pressure reading of the unprocessed fluid outlet, for recording a pressure differential between the pressure in the processed fluid outlet and the unprocessed fluid outlet, and for sending a signal to in response to the resulting pressure differential to change the separation unit from a processing mode to a back flushing mode.

**49.** The process of claim 48, wherein pressure in the processed fluid outlet increases over that of the pressure in the unprocessed fluid outlet to a predetermined level because a build-up of materials that had been suspended in the source fluid increases the pressure differential that is recorded by said transducer to change the separation unit to the back flushing mode.

50. The process of claim 49, wherein a hydraulic accumulator in fluid communication with the processed fluid outlet is designed to siphon off a portion of the processed fluid during the processing mode to provide the necessary processed fluid during the back flushing mode.

51. The process of claim 50, wherein the processing mode comprises the following steps:

a) feeding a source fluid through the source fluid inlet to the separation unit;
b) passing a portion of the source fluid through the membrane card;
c) removing the processed fluid through the processed fluid outlet;
d) removing the other portion of the source fluid that is unprocessed through an unprocessed fluid outlet;
e) continuously measuring the pressure in the processed fluid and the unprocessed fluid outlets;
f) continuously measuring the pressure differential between the processed fluid and the unprocessed fluid outlets; and
g) continuing the processing mode until the transducer changes the system to the back flushing mode.

52. The process of claim 51, wherein the back flushing mode comprises the following steps:

a) closing the flow of source fluid through the source fluid inlet to terminate the processing mode;
b) closing the flow of the unprocessed fluid through the unprocessed fluid outlet;
c) recycling the processed fluid from the hydraulic accumulator by reversing the normal flow of the processed fluid back through the processed fluid outlet into the separation unit;
d) back flushing the processed fluid through the membrane card in the separation unit;
e) removing the back flushed processed fluid through the source inlet;
f) passing the back flushed processed fluid through a by-pass line to the unprocessed outlet
g) continuously measuring the pressure in the processed fluid and unprocessed fluid outlets;
h) continuously measuring the pressure differential between the processed fluid and the unprocessed fluid outlets; and
i) continuing the back flushing mode until the transducer changes the separation unit to the processing mode.

53. The process of claim 52, wherein the pressure in the processed fluid outlet decreases because the removal of materials from the membrane card into unprocessed fluid in the back flushing operation decreases the pressure differential that is recorded by said transducer to change the separation unit to the processing mode.

54. A separation system for the separation of materials from a fluid comprising:

a) a separation unit containing separation elements having at least one source fluid inlet, at least one processed and at least one unprocessed fluid outlet;
b) a pump for feeding a source fluid through the source fluid inlet;
c) a first valve in the source fluid inlet;
d) a first pressure gauge in the source fluid inlet for measuring the pressure of the source fluid passing through the first valve;
e) a hydraulic accumulator in fluid communication with the processed fluid outlet;
f) a second pressure gauge in the processed fluid outlet for measuring the pressure of the processed fluid passing to the hydraulic accumulator;
g) a second valve in the unprocessed fluid outlet;
h) a third valve in the processed fluid outlet;
i) a first by-pass line between the source fluid inlet and the unprocessed fluid outlet;
j) a fourth valve on the first by-pass line;
k) a second by-pass line connected between the unprocessed outlet and the fourth valve;
l) a fifth valve on the second by-pass line; and
m) a transducer having first and second sections, the first section for receiving a signal of the pressure reading of the second pressure gauge in the processed fluid outlet and the second section for receiving a signal of the pressure reading of the first pressure gauge in the unprocessed fluid outlet, for recording a pressure differential between the pressure in the processed fluid outlet and the unprocessed fluid outlet and for sending a signal to the fifth valve in response to the resulting pressure differential to control the respective opening and closing of the first and fifth valves for the processing mode and the back flushing mode.

55. A process for the separation of materials from a fluid comprising the steps of:

a) exposing a fluoropolymeric film to a bombardment of heavy ions to provide the film with a track density;
b) cutting the resulting tracked film into a plurality of separate sections;

c) etching the sections of tracked film with an etching solution to provide the sections of film with a density of pores corresponding to the track density;

d) laminating the resulting sections of the track membranes to a porous backing by means of an adhesive;

e) producing a membrane card with the parameters specified;

f) forming a glue joint around the perimeter of the porous backing of at least two of the membrane cards;

g) bending each of the membrane cards along a bending line to be adjacent to another membrane card to form a projection and a central section between each of the projections so that the porous backing faces outward;

h) pressing the central section of each of the membrane cards onto a fluid collection tube so that each of the projections extend outwardly from the collection tube and the bending lines of at least two of the membrane cards pressed onto the collection tube are adjacent to its perforations;

i) interspersing a porous gauze-like drain between the porous backing of each of the outward projections of each of a plurality of membrane cards so that at least one drain is in contact with the perforations in the collection tube;

j) depositing adhesive along the glue joint of each membrane card to join the drain to the membrane card and the membrane packages to the collection tube;

k) attaching at least a sheet of a turbulizer to the central section of each of the membrane cards and between the projections so that the turbulizers of the separation elements project outwardly from the fluid collection tube; and

l) producing a separation unit containing a plurality of membrane packages operably attached to the fluid collection tube; and

m) assembling a separation system.

56. The process of claim 55, wherein said separation system has at least one source fluid inlet, at least one processed and at least one unprocessed fluid outlet.

57. The process of claim 56, wherein said separation system has regulating means for changing from a processing mode to a back flushing mode after a predetermined time based on a pressure differential between the pressure in the processed fluid outlet and the unprocessed fluid outlet.

58. The process of claim 57, wherein said regulating means is a transducer.

59. The process of claim 58, wherein said transducer has first and second sections, the first section for receiving a signal of the pressure reading of the processed fluid outlet and the second section for receiving a signal of the pressure reading of the unprocessed fluid outlet, and wherein said transducer senses a pressure differential between the pressure of the processed fluid outlet and pressure of the unprocessed fluid outlet and sends a signal to in response to the resulting pressure differential to change the separation system from the processing mode to the back flushing mode.

60. The process of claim 59, wherein pressure in the processed fluid outlet increases over that of the pressure in the unprocessed fluid outlet to a predetermined level because of a build-up of materials that have been suspended in the source fluid resulting in an increase in the pressure differential that is recorded by said transducer to result in a change from the processing mode to the back flushing mode.

61. The process of claim 60, wherein a hydraulic accumulator in fluid communication with the processed fluid outlet is designed to siphon off a portion of the processed fluid during the processing mode to provide the necessary processed fluid during the back flushing mode.

62. The process of claim 61, wherein the processing mode comprises the following steps:

a) feeding a source fluid through the source fluid inlet to the separation unit;

b) passing a portion of the source fluid through membrane card;

c) removing the processed fluid through the processed fluid outlet;

d) removing the other portion of the source fluid that is unprocessed through an unprocessed fluid outlet;

e) continuously measuring the pressure in the processed fluid and unprocessed fluid outlets;

f) continuously measuring the pressure differential between the processed fluid and the unprocessed fluid outlets; and

g) continuing the processing mode until the transducer changes the separation unit to the back flushing mode.

63. The process of claim 61, wherein the back flushing mode comprises the following steps:

a) closing the flow of source fluid through the source fluid inlet to terminate the processing mode;

b) closing the flow of the unprocessed fluid through the unprocessed fluid outlet;

c) recycling the processed fluid from the hydraulic accumulator by reversing the normal flow of the processed fluid back through the processed fluid outlet into the separation system;

d) back flushing the processed fluid through the backed membrane in the separation system;

e) removing the back flushed processed fluid through the source inlet;

f) passing the back flushed processed fluid through a by-pass line to the unprocessed fluid outlet

g) continuously measuring the pressure in the processed fluid and unprocessed fluid outlets;

h) continuously measuring the pressure differential between the processed fluid and the unprocessed fluid outlets; and

i) continuing the back flushing mode until the transducer changes the separation system to the processing mode.

64. The process of claim 63, wherein the pressure in the processed fluid outlet decreases because of the removal of materials from the membrane card into the back flushing processed fluid resulting in a decrease in pressure differential that is recorded by said transducer to change the separation system to the processing mode.

65. A separation unit for separation of materials from fluids comprising a membrane card and a drain to form at least one membrane package, and at least one turbulizer that is spirally wound onto a collection tube so that the processed fluid is collected through the drain, said membrane package having the membrane card folded in half and a drain interspersed between the porous backing surfaces of the two halves of the membrane card, said membrane package having a length determined by the formula:

$$L=3/\sqrt{2}k_2/k_1,$$

where: L is length of the membrane package, meters (m)
$k_1$ is the drain parameter, $m^3$/hr · MPa;
$k_2$ is the membrane card parameter, $m^3$/hr· MPa·$m^2$.

66. The separation unit of claim 65, wherein said membrane card is a track membrane backed with a porous backing.

67. The process of claim 23, wherein the length of the membrane package is determined by the formula:

$$L=3/\sqrt{2}k_2/k_1,$$

where: L is length of the membrane package, meters (m)
$k_1$ is the backing parameter, $m^3$/hr · MPa;
$k_2$ is the membrane parameter, $m^3$/hr · MPa · $m^2$.

68. The process of claim 17, wherein a plurality of the membrane cards are formed into a separation element in which (a) a first sheet of a turbulizer made from a porous gauze-like material is used to form a top sheet of the package, (b) a sheet of a drain made from a gauze-like material is interspersed between the porous backing of upper and lower sheets of the membrane card so that the processed fluid is collected through the drain, and (c) a second sheet of the turbulizer is used to form a bottom sheet of the package.

| Film | Porous substrate | Drainage | Turbulizer |
|---|---|---|---|

*10*     *35*     *80*     *90*

| Exposure |
|---|

*20*

*45*

| Film cutting and etching | | Application of polyester glue |
|---|---|---|

*30*

| Lamination of a porous substrate to a porous track-etched membrane and cutting of membrane cards |
|---|

*40*

| Separating element |
|---|

*95*

# Fig.1

Fig.2A

Fig.2B

Fig.2A-2B

EP 1 849 516 A1

| Continuous film roll | Continous porous substrate roll | Drainage | Turbulizer |

*310*   *340*   *380*   *390*

| Exposure |

*320*

| Etching |

| Application of polyester glue |

*350*

*330*

| Lamination of a continous porous substrate roll to a continous porous track-etched membrane roll |

*360*

| Separating element |

*395*

Fig.3

**Fig.4**

522

510

520

525

530

Fig.5A

545

540

550

Fig.5B

560

Fig.5C

570

575

Fig.5D

Fig.5A-5D

EP 1 849 516 A1

Fig.6A-6D

Fig.6B

Fig.6D

Fig.6A

Fig.6C

Fig.7

Fig.8

Fig.9

## INTERNATIONAL SEARCH REPORT

| International application No. |
|---|
| PCT/RU2004/000515 |

**A. CLASSIFICATION OF SUBJECT MATTER**

B01D 67/00, 69/06, G01N 7/10

According to International Patent Classification (IPC) or to both national classification and IPC

**B. FIELDS SEARCHED**

Minimum documentation searched (classification system followed by classification symbols)

B01D 61/00, 61/02, 61/08, 61/14, 61/18, 63/00, 63/08, 63/10, 67/00, 69/00, 69/06, 71/00, 71/08

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | RU 223196 C1 (FEDERALNOE GOSUDARSTVENNOE UNITARNOE PREDPRIYATIE "ISSLEDOVATELSKY TSENTR I. M. V. KELDYSHA") 27.07.2004,<br>page 3, column 1, lines 47-65, column 2, page 4, column 1 | 1-35, 38-41, 44-45, 55-56, 66-68<br>36-37, 42, 46-53, 57-64 |
| Y<br><br>A | JP 02-002843 A (TONEN CORP et al.) 08. 01. 1990,<br>the abstract | 1-35, 38-41, 44-45, 55-56, 67-68<br>36-37, 42, 46-53, 57-64 |
| | US 5147541 A (KOCH MEMBRANE SYSTEMS, INC.) 15. 09. 1992,<br>column 1, lines 10-17, column 2, lines 29-35, 41-48, columns 3-6 | 17-35, 38-40, 55-56, 67<br>36-37, 42, 57-64 |
| Y<br>A | BORK T. Membrannaya filtratsya, Moscow, Mir, 1987, pages 68-73 | 41<br>42-43 |
| | RU 2144422 C1 (FEDERALNOE GOSUDARSTVENNOE UNITARNOE PREDPRIYATIE "ISSLEDOVATELSKY TSENTR IM. M. V. KELDYSHA", et al) 20.01.2000,<br>columns 1-2, the drawing | |

☐ Further documents are listed in the continuation of Box C.   ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 August 2005 (26.08.2005) | 22 September 2005 (22.09.05) |

| Name and mailing address of the ISA/ | Authorized officer |
|---|---|
| Facsimile No. | Telephone No. |

Form PCT/ISA/210 (second sheet) (July 1998)

27

**INTERNATIONAL SEARCH REPORT**

International application No.

PCT/RU2004/000515

C (Continuation). DOCUMENTS CONSIDERED TO BE RELEVANT

| Category* | Citation of document, with indication, where appropriate, of the relevant passages | Relevant to claim No. |
|---|---|---|
| Y | | |
| A | | |
| | | 45, 55-56 |
| Y | | 42, 46-53, 57-64 |
| A | | |
| Y | RU 2234362 C1 (GOSUDARSTVENNOE NAUCHNOE UCHREZHDENIE "NAUCHNO-ISSLEDOVATELSKY INSTITUT YADERNOI FIZIKI PRI TOMSKOM POLITEKHNICHESKOM UNVERSITETE MINISTERSTVA OBRAZOVANIYA ROSSYSKOI FEDERATSII") 20.08.2004, page 4 | 2, 40 |
| Y | RU 2124986 C1 (DAYKIN INDUSTRIES LTD.) 20.01.1999, column 1, lines 1-16, column 2, lines 1-6, 24-32, columns 3, 4, figure 2 | 40 |
| Y | JP 2004-202442 A (NITTO DENKO CORP) 22. 07. 2004, аб3. [0018], [0019], [0030], [0034], [0035], [0046], figure 3 | 65-68 |
| E | RU 2248552 C1 (FEDERALNOE GOSUDARSTVENNOE UNITARNOE PREDPRIYATIE "ISSLEDOVATELSKY TSENTR IM. M. V. KELDYSHA") 20.03.2005, the description, the drawing | 43 |
| E | RU 2243022 C1 ((FEDERALNOE GOSUDARSTVENNOE UNITARNOE PREDPRIYATIE "ISSLEDOVATELSKY TSENTR IM. M. V. KELDYSHA") 27.12.2004, paragraphs 7-16, the drawing | 54 |

Form PCT/ISA/210 (continuation of second sheet) (April 2005)

<div align="center">**INTERNATIONAL SEARCH REPORT**</div>

| | International application No. |
|---|---|
| | |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:

<u>Continuation of Box III</u>

The International Searching Authority has determined that this international application contains several groups of inventions, namely:
        The inventions claimed in independent claims 1, 23, 40, 41, 43, 44, 54, 55 and 65 are not linked by a single inventive concept, since they do not have the same or corresponding special technical features. On this basis, three groups of inventions have been identified. The first group comprises "a method for producing a membrane card" (claims 1 and 41), " a method for producing a separating assembly or a separating element" (claims 23 and 40); "a method for separating particles" (claims 44 and 55), "a separating device" (claim 65), in which group the special technical feature is the membrane card. The second group comprises "a method for determining the maximum pore diameter" (claim 43), and the third group comprises "a separating assembly" (claim 54). The second and third groups do not have the same or corresponding special technical features in common with each other or with the first group of inventions.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**REFERENCES CITED IN THE DESCRIPTION**

**Patent documents cited in the description**

- US 6540915 B
- US 6565747 B
- US 6793824 B
- US 4549012 A
- SU 1667912
- RU 2144422
- US 5449917 A
- RU 2233196

**Non-patent literature cited in the description**

- **E. U. APEL.** Measurements of the Diameter of Selectively Etchable Tracks Produced in Polymer by Heavy Ions. *The later is an article that appeared in Nuclear Tracks,* 1982, vol. 6 (2-3), 115-118
- Theoretical Foundations Of Heat Engineering-Heat-Technical Experiment. Energoatomizdat. Publishing House, 1988, vol. 2, 197-198